# EUROPEAN PATENT SPECIFICATION

(11) **EP 3 786 393 B1**
(45) Date of publication and mention of the grant of the patent: **04.10.2023**
(21) Application number: 19791961.6
(22) Date of filing: 22.04.2019
(51) Int. Cl.: E04H 12/34, F03D 13/10, F03D 13/20, E04H 12/18

(54) **MOVABLE MODULE FOR HOISTING TELESCOPIC TOWERS AND METHOD FOR HOISTING TELESCOPIC TOWERS**
BEWEGLICHES MODUL ZUM HEBEN VON TELESKOPISCHEN TÜRMEN UND VERFAHREN ZUM HEBEN VON TELESKOPISCHEN TÜRMEN
MODULE MOBILE DE HISSAGE DE TOURS TÉLÉSCOPIQUES ET PROCÉDÉ DE HISSAGE DE TOURS TÉLÉSCOPIQUES

(30) Priority: 25.04.2018 ES 201830404
(43) Date of publication of application: 03.03.2021
(73) Proprietor: Esteyco SA, 28036 Madrid (ES)
(72) Inventor: SERNA GARCIA-CONDE, José Salustiano, 28036 Madrid (ES); FERNANDEZ GOMEZ, Miguel Angel, 28036 Madrid (ES)
(74) Representative: Tribalyte Ideas
(86) International application number: PCT/ES2019/070272
(87) International publication number: WO 2019/207188

(56) References cited:
- EP-A1- 2 454 427
- EP-B1- 2 454 427
- WO-A1-2018/068117
- WO-A1-2018/068117
- ES-A1- 2 606 786
- ES-A2- 2 407 756
- US-A- 6 046 706
- US-A- 6 046 706
- US-A1- 2007 028 532

## Description

### FIELD OF THE INVENTION

The present invention relates to a movable module according to claim 1 for hoisting telescopic towers, for example concrete and/or metal telescopic towers. The primary sector of application thereof is the construction industry, particularly in assembling towers, and more specifically telescopic towers.

### BACKGROUND OF THE INVENTION

High-rise tower structures such as those commonly used for supporting wind turbines are often constructed by means of prefabricated reinforced and/or prestressed concrete segments which are subsequently transported to the installation site where they are hoisted by means of a crane and assembled in their final position. In the case of towers having a circular cross-section, each vertical section is generally assembled from connected segments. The lower section of the assembly tower is erected first, and after that successive sections are hoisted onto the lower section, being lifted to their final position using a crane. The sections are usually pre-assembled at ground-level, although, alternatively, the segments of a particular section can be hoisted separately and then be assembled in the upper part of the previous section. As a final step in the installation method, the upper section is hoisted such that it supports the assembly formed by the generator and the rotor of the wind turbine.

Wind turbine towers can reach heights in the order of 100-150 m, supporting generation units capable of producing power in the order of one to tens of megawatts. Conventional techniques for constructing these towers require the segments of the tower to be lifted using large cranes, which must present hoisting heights of at least the total height the structure of the tower itself. The generator unit, which may weigh up to 200 tons, also has to be lifted to its final position at the upper part of the structure. For this purpose, cranes that are able to safely lift these weights to such heights are very large and expensive, and the process of transporting a crane of this type to the installation sites, as well as the installation thereof, is a complex task that requires skilled workers, heavy-duty machinery and, often, the construction of roads to allow the different elements forming the tower to be transported. These complications are also reproduced during tower maintenance and repair tasks after the tower is installed.

Patent application WO 2009/010771 A2 describes a method of hoisting a telescopic tower in which several prefabricated telescopic sections of a tower are horizontally assembled at the ground-level. Said telescopic sections are hoisted together in the vertical position, either by means of a crane or by lifting each section against its outer neighboring section, using an arrangement of supporting elements and extendable connectors such as powered jacks. In the raising method described in said application, each vertical section is nested in the contiguous outer section thereof, such that the wall elements form an additional supporting wall covering the inner surface of each outer tower section.

The method of hoisting a tower described in WO 2009/010771 A2 suffers, however, from the following drawbacks. First, the method is based on the support of a flange in the lower part of each tower section, on a projection in the lower part of the inner section. This implies that the sections must be hoisted in a specific order, since each successive inner section rests on its outer neighboring section. Secondly, the method of WO 2009/010771 A2 is excessively toilsome, since it implies the construction and subsequent dismantling of an entire inner wall structure (which is almost as large as the tower itself), which may have a serious impact on the tower construction speed. Third, the described method is only suitable for structures in which all the walls of all the sections of the tower are substantially parallel.

As an alternative to the method proposed in application WO 2009/010771 A2, improved methods of hoisting have been considered, such as the method described in international patent application WO 2011/006526 A1. This method is based in a plurality of telescopic sections, arranged at the ground-level in a substantially coaxial manner, with an innermost section and one or more sections arranged around said innermost section, forming telescopic sections forming the total length of the tower. For fixing the sections to one another, a fitting step is performed through a plurality of jacking tendons between upper and lower points of said telescopic sections, where tension is applied to said tendons by means of hydraulic jacks, such that the weight of each section is supported at the upper jacking points of the contiguous section, and the sections are raised as tensioning is performed on the mentioned jacking tendons.

Although the alternative described in WO 2011/006526 A1 allows the processes of installing conventional telescopic towers to be improved, it still presents problems left unsolved in the state of the art fundamentally relating to the complexity of the pre-installation steps and the execution times for hoisting tower sections. More specifically, the invention described in said application comprises a first installation phase for installing the tendons in each of the telescopic sections, and later phases in which the hydraulic jacks are connected to and released from the cables in order to perform the various hoisting operations for completely raising the tower. However, this implies the necessary delay in pre-installation and hoisting times, since a prior task of placing the loose cables and a subsequent task of connecting the hydraulic jacks to said cables are necessary. Furthermore, for each of the different hoisting operations that may be involved for a tower, the hydraulic jacks must be released from the cables and connected to others, with the corresponding increase in work, time, and risk, as said jacking points are sensitive and bear enormous responsibility.

Patent EP 2454427 A1 refers to a method based in a plurality of telescopic sections, arranged coaxially at the ground level. For hoisting the sections such that the final structure, e.g., a tower, is erected vertically, a lifting of the innermost sections is performed through a plurality of jacking tendons between upper and lower points of said telescopic sections which comprise upper and lower jacking points. Tension is applied to said tendons by means of hydraulic jacks such that the sections are raised as tensioning is performed on the mentioned jacking tendons.

Patent application WO 2018/068117 A1 describes a method for assembling a tower comprising at least two telescopic sections, one cylindrical and one frustoconical. Said method comprises the use of longitudinal prestressing means to secure the tubular segments of the tower as well as of rollers to stabilize the inner section of the tower during its raising, which is performed, similarly to previously discussed inventions, through a plurality of jacking tendons between upper and lower points of the telescopic sections.

The inventions disclosed in these two patents provide beneficial methods for hoisting a tower without the use of large cranes, but comprise the use of extra elements (of securitization, stabilization...) and steps that lead to margin for improvement in terms of time efficiency of their performance.

Finally, patent application US 6046706 A1, although related to the hoisting of telescopic antenna masts, describes generically the state of the art in the field of the present invention by proposing a system of diametrically opposed pulley mechanisms in order to hoist the different sections of said masts.

For the purpose of solving this and other problems inherent to the prior art, the objective of the present invention is to provide a movable module and a method of hoisting which allows the sections of the tower to be assembled without a crane, or with the use of a small crane having a size substantially equal to the size of a tower section, where said method comprises hoisting the tower sections much more quickly and more efficiently than with the known techniques, which further allows the use of tower sections having non-parallel walls.

### BRIEF DESCRIPTION OF THE INVENTION

The present invention provides a movable module according to claim 1 for hoisting telescopic towers and the corresponding method according to claim 9 of hoisting telescopic towers, said towers preferably being concrete and/or metal towers, which allows the process for hoisting them to be optimized.

Another objective of the present invention is to also provide a system which allows the number of operations to be performed during said method to be reduced, thereby avoiding more complicated processes, and reducing costs, times, and risks.

With the proposed invention, the operation time is furthermore reduced, and the entire process is streamlined, which at the same time allows the time for hoisting the towers to be reduced, which represents important operative and economic savings. Furthermore, considering that wind farms usually comprise a large number of towers, the present invention qualitatively improves the capacity and ease for reclaiming and reusing hoisting means and equipment in the different towers of a farm.

The objects described above are achieved by means of a movable module for hoisting telescopic towers, preferably wind turbine towers, an ascending section of the tower being hoisted in relation to a supporting section of the tower immediately outside, where said movable module advantageously comprises:
- At least one hydraulic jack.
- At least one hoisting cable pre-installed through the hydraulic jack and which remains connected to the jack throughout the performance of the method of hoisting the telescopic tower.
- Grouping means arranged at the free end of at least one hoisting cable.

Likewise, during hoisting of the tower, the movable module is temporarily fixed to the head of the supporting section, and the grouping means are temporarily fixed to the base of the ascending section.

More specifically, the objective of the invention is performed by means of a movable module for hoisting telescopic towers and a method of hoisting telescopic towers according to the claims herein.

The fact that the hydraulic jack and hoisting cable are conveniently and permanently integrated in a single mobile piece of equipment throughout the performance of the method of hoisting the telescopic tower, together with the grouping means arranged at a free end of at least one hoisting cable, are a key aspect of the present invention since, unlike the previous inventions, they allow avoiding the successive and numerous operations of previously placing loose cables and connecting and releasing the hydraulic jacks and cables, facilitating and streamlining the entire process, and improving its reliability. The module herein described thereby allows, during its application, the steps of positioning the hoisting cables and the raising of each section to be performed in a single step, optimally reusing the cables for different hoisting operations and without implementing any of connection/disconnection operation between the hoisting cables and the hoisting jacks.

Likewise, the movable module can be easily moved so as to be placed in the different positions established for hoisting the different sections of the tower. Furthermore, said module moves at all times as a single part, that is, only one movement between hoisting phases is necessary, greatly improving streamlining and cost. This feature differs entirely from the solutions known in the current state of the art, where the elements must be mobilized one by one, which implies a significant advantage of the present invention over the current state of the art.

Additionally, the objectives described above are achieved by means of a method of hoisting telescopic towers using a movable module according to the present invention, characterized in that it comprises the following steps performed in any technically possible order:
- Positioning the hoisting module at the head of a supporting section.
- Fixing the hoisting cable at the base of an ascending section through the grouping means.
- Taking up the hoisting cable with the hydraulic jack and thereby hoisting the ascending section.
- Fixing the base of the hoisted ascending section at the head of the supporting section.
- Releasing the grouping means from the base of the ascending section.
- Releasing the movable module from the head of the supporting section.

Said movable module may comprise also at least one cable guiding structure which allows guiding the hoisting cable protruding from the upper part of the hydraulic jack.

Likewise, the module may also comprise at least one cable take-up element which can furthermore be arranged in a raised position, such that the circulation of workers is facilitated. In this sense, this position of the take-up element largely facilitates the operations to be performed, which allows the free circulation of operators and represents another considerable advantage of the invention by reducing the dimensions of the work platform and/or avoiding the installation thereof. Said take-up element is in the form of a drum or recoiler. The take-up element can be passive or active, incorporating a motor or the like to collaborate in the deployment and/or drawing-in of the hoisting cable.

Additionally, the movable module may also comprise a guiding element in contact with the ascending section, which is preferably a sliding or rolling contact, and/or contact by means of caterpillar track-type elements.

In turn, the method of hoisting telescopic towers described above may comprise the hoisting of at least two different sections of the tower, the main steps of the method being repeated for hoisting different sections of the tower. In this case, said method may be characterized in that the innermost section of the tower is initially hoisted, and hoisting is continued from the innermost to the outermost section.

In said method of hoisting telescopic towers, the heads of different tower sections to be hoisted can be positioned at considerably the same level. The movable module of the invention can thereby be moved radially for the positioning thereof at the heads of the different tower sections, through at least one horizontal movement means, for example one or more rails.

Likewise, said method may be characterized in that the described grouping means may be reclaimable and comprise:
- a screw-in wedge plate
- a first screw-in distribution plate that can be screwed into said wedge plate
- a second distribution plate with a hole through which said wedge plate can pass.

Said wedge plate may comprise a protective element allowing it to run through the conduits of the different sections intended for housing the hoisting cables. Likewise, said protective element of the wedge plate may be pointed to prevent jamming.

### BRIEF DESCRIPTION OF THE DRAWINGS

The preceding and other features and advantages will be better understood from the following detailed description of embodiments in reference to the attached drawings, which must be considered by way of illustration and not limitation, in which:
Figure 1 illustrates a general view of the movable module for hoisting telescopic towers of the invention, according to a preferred embodiment thereof.
Figure 2 shows an embodiment of the movable module of the invention further comprising an auxiliary structure for guiding the cable and a take-up element for taking up said cable.
Figure 3 depicts an embodiment of the movable module of the invention further comprising a guiding element.
Figure 4 a) shows a front view of an embodiment of the invention based on a configuration with two hydraulic jacks.

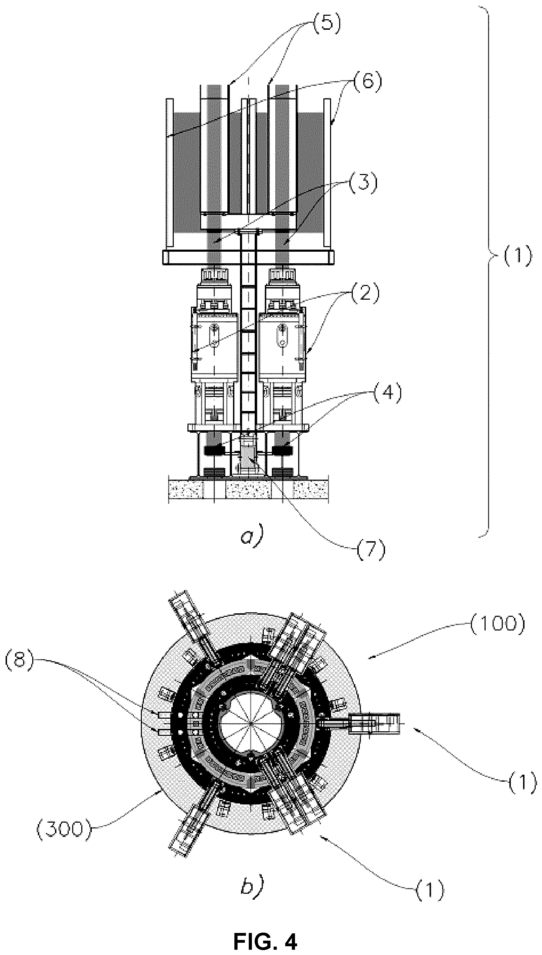

Figure 4 b) illustrates a plan view of a possible tower hoisting configuration based on the application of several integrated modules.

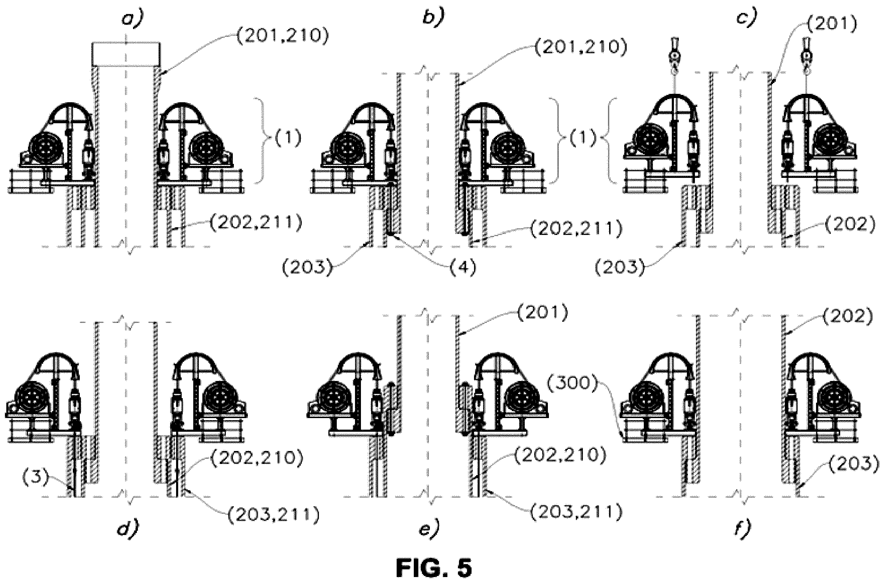

Figures 5a-5f depict different steps of a possible embodiment of the method of hoisting described in the present invention.

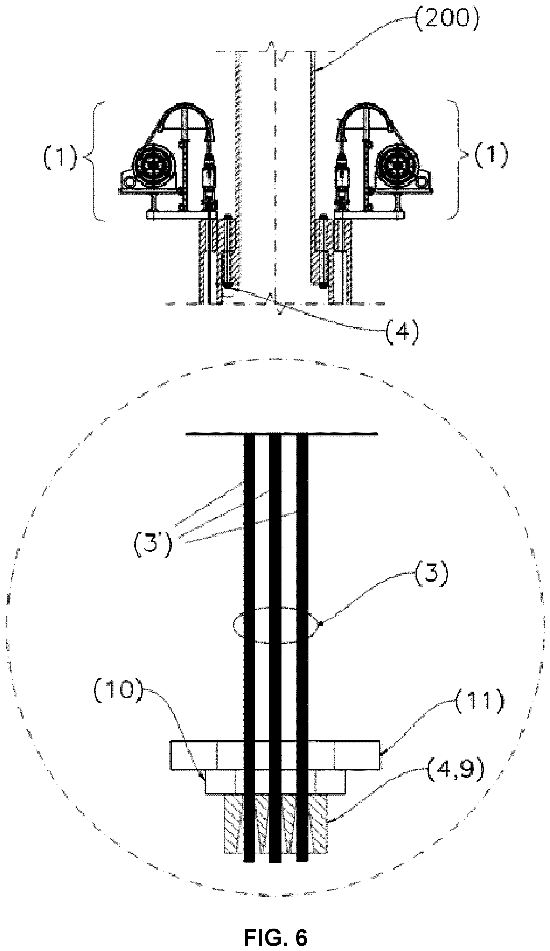

Figure 6 illustrates an embodiment of the grouping means described in the present invention.

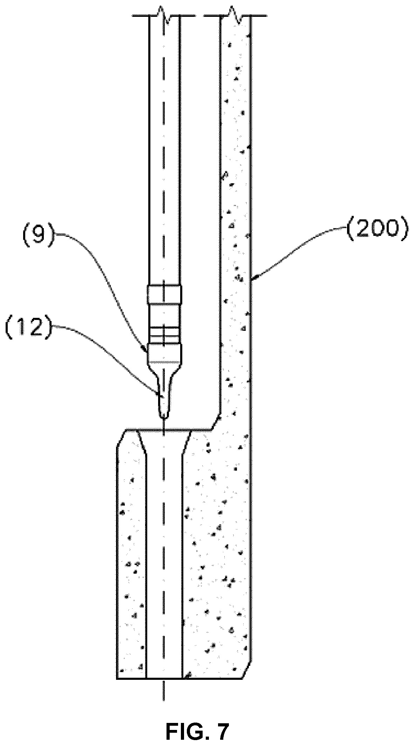

Figure 7 shows a possible embodiment of a protective element of the wedge plate described in the present invention.

### List of reference numbers in the figures:

| | |
|---|---|
| (1) | Movable hoisting module |
| (2) | Hydraulic jack |
| (2') | Frame |
| (3) | Hoisting cable |
| (3') | Strands making up the hoisting cable |
| (4) | Grouping means |
| (5) | Cable guiding structure |
| (6) | Cable take-up element |
| (7) | Guiding element |
| (8) | Horizontal movement means |
| (9) | Screw-in wedge plate |
| (10) | First screw-in distribution plate |
| (11) | Second screw-in distribution plate |
| (12) | Protective element |
| (100) | Telescopic tower |
| (101) | Wind turbine tower |
| (200) | Tower sections |
| (202) | First adjacent section |
| (203) | Second adjacent section |
| (210) | Ascending section |
| (211) | Supporting section |
| (300) | Work platform |

### DETAILED DESCRIPTION OF THE INVENTION

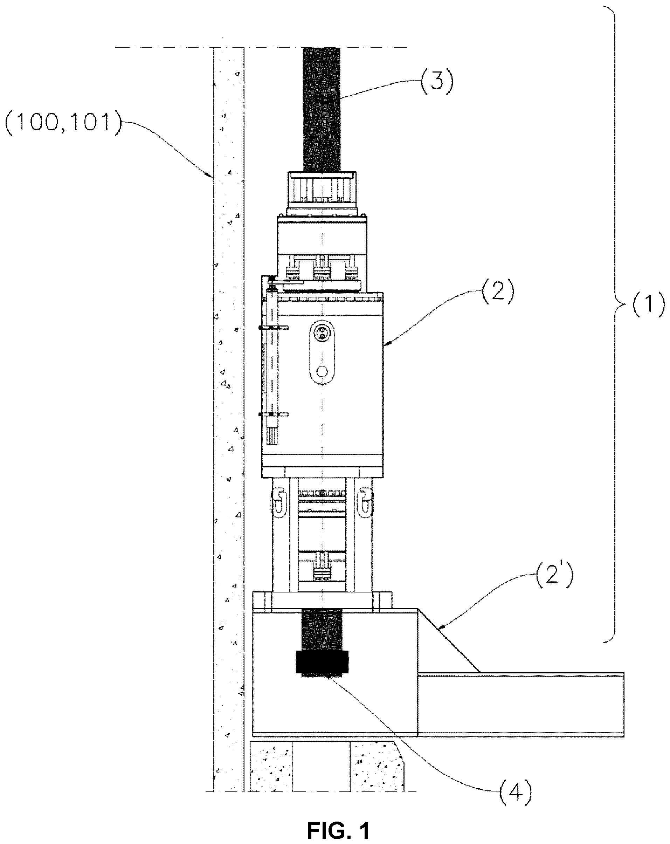

Figures 1-7 illustrate different views of the movable module (1) of the invention for hoisting telescopic towers (100), preferably wind turbine towers (101). In a preferred embodiment, the movable module (1) comprises a hydraulic jack (2), a hoisting cable (3) pre-installed through the hydraulic jack (2) and which remains connected to said jack throughout the performance of the method of hoisting the telescopic tower (100), and grouping means (4) arranged substantially at the free end of the hoisting cable (3).

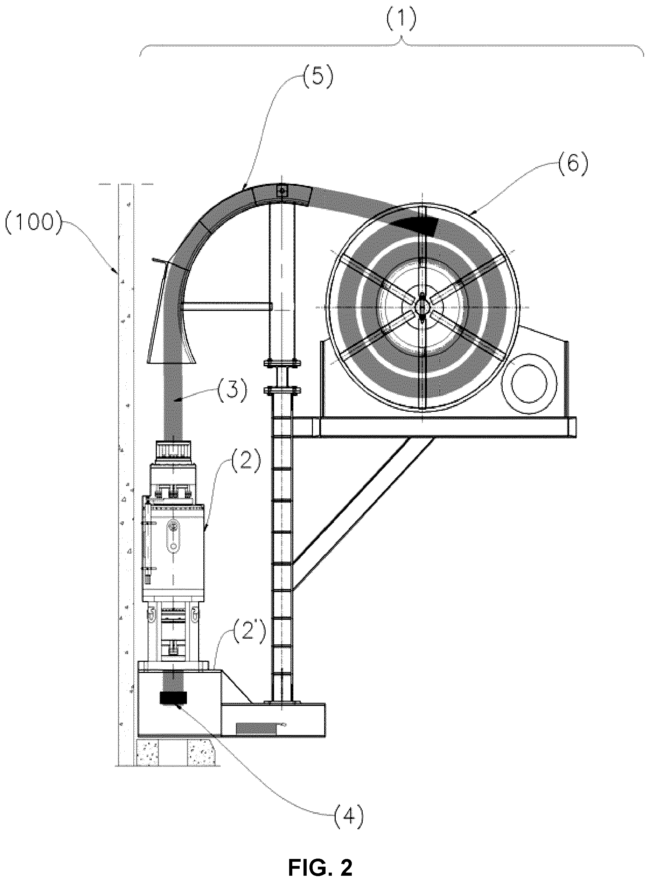

Preferably, the hoisting cable (3) is formed by a plurality of strands (3') (see the schematic distribution thereof in Figure 6). The cable (3) goes through the hydraulic jack (2), such that the upper end thereof preferably protrudes from the upper part of the hydraulic jack (2), and its lower end protrudes from the lower part of the hydraulic jack (2) (see Figures 2-3), said hoisting cable (3) remaining connected to the hydraulic jack (2) throughout the performance of the method of hoisting the telescopic tower (100) (see, for example, Figure 5).

More preferably, the strands (3') are integrated in the hoisting cable (3) independently, that is, the strands (3') are not intertwined or mechanically connected, but rather are grouped together in a substantially parallel bundle.

The movable module (1) of the invention also has grouping means (4) intended for preventing the strands (3') from crossing each other, as well as to facilitate threading the hoisting cable (3) through the head of a supporting section (211) and the base of an ascending section (210) (see said sections in Figure 5) of the telescopic tower (100). The hoisting cable (3) may, additionally and as shown in Figure 7, have a pointed geometry for facilitating the guiding thereof through said sections (210, 211).

Additionally, the grouping means (4) are essentially positioned at the lower end of the hoisting cable (3), keeping all the strands (3') making up said hoisting cable (3) grouped together. In addition to grouping, the grouping means (4) contribute to keeping the strands (3') positioned so as to maintain the distribution thereof which is used both in the hydraulic jack (2) and at the lower end of the cable, furthermore being able to act as anchoring means for holding said position.

In additional embodiments of the invention, the grouping means (4) can be detachable, being removable for adding anchoring means, and being added again at the lower end of the cable at a later time of the method of hoisting the tower (100).

As described, the movable hoisting module (1) of the invention allows a two-way movement of the hoisting cable (3) through the hydraulic jack (2), said hoisting cable (3) being able to both be extended in the essentially descending direction and be taken up in essentially the ascending direction.

In a preferred embodiment of the invention, the mean diameter "D" of the hoisting cable (3) is less than 4·d·(N)^{1/2}, where "d" is the mean diameter of the strands (3') forming the hoisting cable (3) and "N" is the total number of strands (3'). This thereby achieves the hoisting cable (3) presenting suitable dimensions for going through the flanges of the sections (210, 211) of the telescopic tower (100).

The movable module (1) of the invention preferably comprises a supporting frame (2') to which the lower part of the hydraulic jack (2) is fixed, and comprising a channel for the passage of the hoisting cable (3), the dimension of which allows housing the grouping means (4). Thus, the movable hoisting module (1) can adopt a transfer position in which the hoisting cable (3) is completely drawn in or taken up, and in which the lower end of the hoisting cable (3) and the grouping means (4) are housed in a channel of the frame (2'). As a result of this configuration, the movable module (1) may be transferred between hoisting operations or between towers, or even between farms, supported on its frame (2'). To that end, in the transfer position the cable (3) is prevented from protruding below the frame (2'). Likewise, in different embodiments of the invention, the movable module (1) may comprise one or more jacking points (not shown in the figures) which allow suspending the module completely. Said jacking points are preferably positioned substantially on the vertical of the center of gravity of the movable module in its transfer position.

In another preferred embodiment of the invention, the frame (2') may adopt a horizontal dimension such that the movable module (1) simply supported on said frame (2') is sufficiently stable against horizontal loads, which facilitates storage and transfer of the module (1), for example, between towers of the farm.

In another preferred embodiment of the invention, the frame (2') comprises horizontal movement means (8) for facilitating the horizontal transfer of the movable module (1) for different hoisted. Said movement means (8) can be of any of the types known in the art for the movement of equipment, such as rails and/or rolling means, or elements for facilitating the sliding of the module (1). They may likewise incorporate or use pushing or pulling means for applying force to move the module (1) from one position to another (for example, from the head of one supporting section (211) to the next one).

In a preferred embodiment of the invention, the movable module (1) further comprises one or more work platforms and/or equipment storage, preferably connected to the frame (2'). The equipment that can be housed in the mentioned platforms is typically power pack-type systems (hydraulic pumps) or manifolds which allow hydraulically powering the jacks (2) and/or controlling their operation. They may also incorporate telecommunication means for facilitating the remote control of the movable module (1).

Figure 2 shows a preferred embodiment of the movable module (1) further comprising a cable guiding structure (5), which allows the guiding of the hoisting cable (3) protruding from the hydraulic jack (2). Said cable guiding structure (5) acts throughout the entire process of hoisting the sections of the telescopic tower (100), directing the cable to a cable take-up element (6) also comprised in the movable module (1). In this case, said cable take-up element (6) is arranged in a raised position, such that the circulation of workers on the corresponding work platform (300) during the process of hoisting the telescopic tower (100) is facilitated. The need to install a larger and therefore more expensive platform is thereby eliminated.

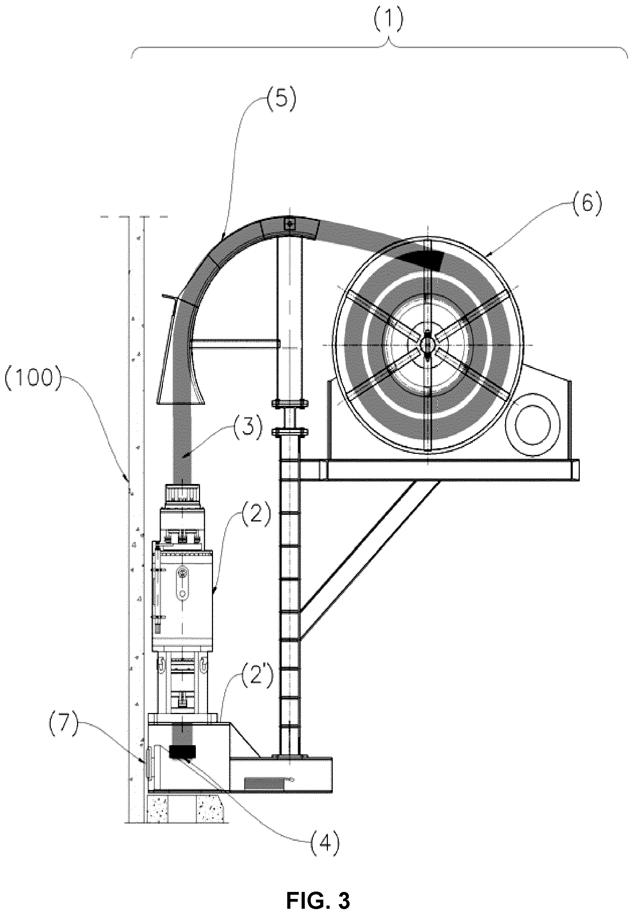

Figure 3 depicts an embodiment of the movable module described in the present invention which additionally incorporates a guiding element (7) in contact with the ascending section (210). Said contact can preferably be a sliding or rolling contact, or contact by means of caterpillar track-type elements. Therefore, said guiding element may exert a force perpendicular to the structure for restricting possible inclinations of the sections of the telescopic tower (100) during the process of hoisting.

Figure 4a shows a front view of another preferred embodiment of the invention. In this case, the movable module (1) comprises two hydraulic jacks (2) and the corresponding hoisting cables (3), cable guiding structures (5) for guiding said cables, and the cable take-up elements (6). Furthermore, this embodiment also comprises a guiding element (7) positioned between the two hydraulic jacks (2). This embodiment allows exerting a greater hoisting force if the sections to be hoisted require more powerful means, while at the same time optimizing the entire overall process of hoisting the telescopic tower.

Figure 4b illustrates a plan view of a possible hoisting configuration of a telescopic tower with several integrated modules (1) arranged homogenously on the perimeter of the tower sections to be hoisted. The possible arrangement of the horizontal movement means (8) (for example, rails) comprised in the method and allowing the movement of the movable module (1) for the positioning thereof in each step of hoisting can be observed in this figure.

The arrangement of a work platform (300) which is smaller as a result of the cable take-up elements (6) being arranged in a raised position, thereby facilitating the circulation of workers, can be observed in this embodiment.

The additional arrangement of three hoisting modules (1) arranged in the outermost section of the tower (100) acting only in the last phase of hoisting due to the need to lift the entire structure, with a much greater weight than in the preceding phases, can also be observed.

Figure 5 depicts a possible embodiment of the method of hoisting same described in the present invention.

Figure 5a shows a first hoisting step in which the movable module (1) is first positioned at the head of the supporting section (211), which in this case is the immediately adjacent section (202) and the hoisting cable (3) is fixed to the base of the ascending section (210), which in this case is the innermost section of the tower (201), by the grouping means (4) positioned at the base of said section to subsequently perform the hoisting thereof by means of taking up said cable.

Once hoisted, as shown in Figure 5b, the base of the hoisted section (201) is fixed to the head of the supporting section (211), releasing the grouping means (4) and releasing the movable module (1) from the head of the supporting section (211). Next, Figure 5c illustrates the movement of the movable module (1) as a single part to the head of the following supporting section (211), which in this case is the immediately adjacent section (203). In this case, the movement is performed by lifting the module by means of cranes, although it can also be performed by sliding the module through the horizontal movement means (8).

Figure 5d shows the following hoisting step where the hoisting cable (3) slides and is fixed to the base of the new ascending section (210).

Figure 5e depicts a subsequent hoisting step in which the previously fixed sections (201, 202) are hoisted.

Lastly, Figure 5f shows the next step similar to the step depicted in Figure 5b, in which the hoisted sections (201, 202) are fixed to the supporting section (211).

As described above, an advantage of the method of the invention is that it does not require any step of connecting and/or disconnecting between the hoisting cable (3) and the hydraulic jack (2), or any operation for placing loose cables. The movable module (1) itself is thereby capable of deploying the taken up cable (3) for placing it the hoisting position.

Figure 6 illustrates an embodiment of the grouping means (4) described in the present invention, comprising a screw-in wedge plate (9), a first screw-in distribution plate that can be screwed into said wedge plate (10), and a second distribution plate (11) with a hole through which said wedge plate can pass.

This configuration allows performing the method of hoisting same avoiding the placement of the wedge plate (9) in each hoisting phase, keeping the hoisting cable (3) threaded and connected to the hydraulic jack (2) throughout the entire method.

Lastly, Figure 7 shows a protective element (12) installed in the wedge plate (9) such that it is able to run through the conduits of the different sections intended for housing the hoisting cables (3). Furthermore, said protective element (12) may be pointed to prevent jamming in the conduits.

## Claims

1. A movable module (1) for hoisting telescopic towers (100), suitable for hoisting an ascending section (210) of a tower (100) hoisted in relation to a supporting section (211) immediately outside of said tower (100), and the movable module (1) also being suitable for being temporarily fixed to the head of said supporting section (211),
the movable module (1) comprising:
- at least one hydraulic jack (2);
- at least one hoisting cable (3) formed by a plurality of strands (3') going through said hydraulic jack (2), such that one end of the hoisting cable (3) protrudes from an upper part of the hydraulic jack (2) and the other end of the hoisting cable (3) protrudes from a lower part of the hydraulic jack (2);
- grouping means (4) positioned substantially at one end of the hoisting cable (3), keeping the strands (3') making up said hoisting cable (3) grouped together, and wherein the mean diameter D of said cable (3) is less than 4·d·(N)^{1/2}, where d is the mean diameter of the strands (3') forming the hoisting cable (3) and N is the total number of strands (3') forming the hoisting cable (3);
- a supporting frame (2') to which a lower part of the hydraulic jack (2) is fixed, and comprising a channel for the hoisting cable (3);
and **characterized in that** the movable module (1) further comprises:
- a cable take-up element (6) in the form of a drum or recoiler, which can be passive or active to collaborate in the deployment and /or drawing-in of the hoisting cable (3), which allows said movable module (1) to adopt a transfer position in which the hoisting cable (3) is completely drawn in or taken up, and in which the lower end of the hoisting cable (3) and the grouping means (4) are housed in the channel of the frame (2');
and **in that** said movable hoisting module (1) allows for a two-way movement of the hoisting cable (3) through the hydraulic jack (2), said hoisting cable (3) being able to both be deployed out of the take-up element (6) in the essentially descending direction and be taken up in the take-up element (6) in essentially the ascending direction.

2. The movable module (1) for hoisting telescopic towers (100) according to the preceding claim, wherein the cable take-up element (6) is arranged in a raised position in relation to the assembly of the module (1), suitable for facilitating the circulation of workers during hoisting.

3. The movable module (1) for hoisting telescopic towers (100) according to any of the preceding claims, comprising at least one guiding element (7) for guiding a cable (5) which allows the guiding of the hoisting cable (3) protruding from the hydraulic jack (2).

4. The movable module (1) for hoisting telescopic towers (100) according to the preceding claim, wherein the guiding element (7) is in contact with an ascending section (210) of the tower (100).

5. The movable module (1) for hoisting telescopic towers (100) according to any of the preceding claims, wherein the grouping means (4) are reclaimable and comprise:
- a screw-in wedge plate (9); and/or
- a first screw-in distribution plate that can be screwed into said wedge plate (10); and/or
- a second distribution plate (11) with a hole through which said screw-in wedge plate (9) can pass

6. The movable module (1) for hoisting telescopic towers (100) according to the preceding claim, wherein the screw-in wedge plate (9) comprises a guiding element (12) configured for running through a plurality of conduits in the sections (210, 211), intended for housing the hoisting cables (3).

7. The movable module (1) for hoisting telescopic towers (100) according to any of the preceding claims, comprising at least one auxiliary structure for adapting the movement of said module (1) to the geometry of the telescopic tower (100) in the collapsed situation.

8. The movable module (1) for hoisting telescopic towers (100) according to any of the preceding claims, comprising one or more work platforms (300) and/or equipment storage connected to the frame (2').

9. A method of hoisting a telescopic tower (100) of the type comprising at least one ascending section (210) hoisted in relation to a supporting section (211) immediately outside of said tower (100), and using at least one movable module (1) according to any of the preceding claims,
wherein the method comprises performing the following steps:
a) arranging the movable module (1) on the head of the supporting section (211);
b) using the movable module (1) for deploying the hoisting cable (3) out of the take-up element (6), deploying it in the descending direction from the head of the supporting section (211) to the base of an ascending section (210);
c) using the movable module (1) for taking up the hoisting cable (3) in the ascending direction with the hydraulic jack (2), drawing the hoisting cable (3) in the take-up element (6) and hoisting the ascending section (210) until its base contacts the head of the supporting section (211);
d) fixing the base of the hoisted ascending section (210) to the head of the supporting section (211);
e) releasing the hoisting cable (3) from the base of the ascending section (210);
f) positioning the movable module in the transfer position;
g) removing the movable module (1) from the head of the supporting section (211).

10. The method of hoisting telescopic towers (100) according to the preceding claim, wherein at least two different sections of the tower (100) are hoisted, **characterized in that** steps a) to g) are repeated for hoisting different sections of the tower (100), and wherein between different hoisting operations of said sections, the following steps are performed:
h) repositioning the movable module (1) in a new position; and/or
i) horizontally transferring the movable hoisting module (1) to the head of another supporting section (211) of the tower for another hoisting operation.

11. The method of hoisting telescopic towers (100) according to any of claims 9-10, wherein:
- at least two different sections of the tower (100) are hoisted, and wherein the innermost section of the tower (201) is initially hoisted; and/or
- the heads of different tower sections (200) to be hoisted are positioned at considerably the same level.

12. The method of hoisting telescopic towers (100) according to any of claims 9-11, wherein the hoisting module (1) is moved radially for the positioning thereof at the heads of the different tower sections (200), through at least one horizontal movement means (8).

13. The method of hoisting telescopic towers (100) according to any of claims 9-12, comprising, before performing step b), the step of:
j) arranging an auxiliary work structure at the base of the innermost section of the tower.

14. A telescopic tower (100) of the type comprising at least one ascending section (210) hoisted in relation to a supporting section (211) immediately outside of said tower (100), comprising at least one movable module (1) according to any of claims 1-8.

## Patentansprüche

1. Bewegliches Modul (1) zum Heben von teleskopischen Türmen (100), das zum Heben eines ansteigenden Abschnitts (210) eines Turms (100) geeignet ist, der in Bezug auf einen Tragabschnitt (211) unmittelbar außerhalb des Turms (100) gehoben wird, und wobei das bewegliche Modul (1) auch dazu geeignet ist, vorübergehend an dem Kopf des Tragabschnitts (211) befestigt zu werden,
wobei das bewegliche Modul (1) Folgendes umfasst:
- mindestens einen Hydraulikheber (2);
- mindestens ein Hebekabel (3), das aus einer Vielzahl von Litzen (3') gebildet ist, die durch den Hydraulikheber (2) verlaufen, so dass ein Ende des Hebekabels (3) aus einem oberen Teil des Hydraulikhebers (2) herausragt und das andere Ende des Hebekabels (3) aus einem unteren Teil des Hydraulikhebers (2) herausragt;
- Gruppierungsmittel (4), die im Wesentlichen an einem Ende des Hebekabels (3) positioniert sind, wobei sie die Litzen (3'), die das Hebekabel (3) bilden, zusammen gruppiert halten, und wobei der mittlere Durchmesser D des Kabels (3) weniger als 4·d·(N)^{1/2} beträgt, wobei d der mittlere Durchmesser der Litzen (3') ist, die das Hebekabel (3) bilden, und N die Gesamtzahl der Litzen (3') ist, die das Hebekabel (3) bilden;
- einen Tragrahmen (2'), an dem ein unterer Teil des Hydraulikhebers (2) befestigt ist, und der einen Kanal für das Hebekabel (3) umfasst;
und **dadurch gekennzeichnet, dass** das bewegliche Modul (1) ferner Folgendes umfasst:
- ein Kabelaufwickelelement (6) in Form einer Trommel oder eines Aufrollers, das passiv oder aktiv sein kann, um bei der Ausbringung und/oder dem Einziehen des Hebekabels (3) mitzuwirken, was es dem beweglichen Modul (1) ermöglicht, eine Überführungsposition einzunehmen, in der das Hebekabel (3) vollständig eingezogen oder aufgenommen ist, und in der das untere Ende des Hebekabels (3) und die Gruppierungsmittel (4) in dem Kanal des Rahmens (2') aufgenommen sind;
und dass das bewegliche Hebemodul (1) eine Bewegung des Hebekabels (3) in zwei Richtungen durch den Hydraulikheber (2) ermöglicht, wobei das Hebekabel (3) in der Lage ist, sowohl in der im Wesentlichen absteigenden Richtung aus dem Aufwickelelement (6) ausgebracht zu werden als auch in der im Wesentlichen ansteigenden Richtung im Aufwickelelement (6) aufgenommen zu werden.

2. Bewegliches Modul (1) zum Heben von teleskopischen Türmen (100) nach dem vorhergehenden Anspruch, wobei das Kabelaufwickelelement (6) in einer angehobenen Position in Bezug auf die Anordnung des Moduls (1) angeordnet ist, die geeignet ist, den Umlauf der Arbeiter beim Heben zu erleichtern.

3. Bewegliches Modul (1) zum Heben von teleskopischen Türmen (100) nach einem der vorhergehenden Ansprüche, das mindestens ein Führungselement (7) zur Führung eines Kabels (5), das die Führung des Hebekabels (3) ermöglicht, das aus dem Hydraulikheber (2) herausragt, umfasst.

4. Bewegliches Modul (1) zum Heben von teleskopischen Türmen (100) nach dem vorhergehenden Anspruch, wobei das Führungselement (7) in Kontakt mit einem ansteigenden Abschnitt (210) des Turms (100) steht.

5. Bewegliches Modul (1) zum Heben von teleskopischen Türmen (100) nach einem der vorhergehenden Ansprüche, wobei die Gruppierungsmittel (4) wiedergewinnbar sind und Folgendes umfassen:
- eine einschraubbare Keilplatte (9); und/oder
- eine erste einschraubbare Verteilplatte, die in die Keilplatte (10) geschraubt werden kann; und/oder
- eine zweite Verteilplatte (11) mit einem Loch, durch das die einschraubbare Keilplatte (9) hindurchgehen kann.

6. Bewegliches Modul (1) zum Heben von teleskopischen Türmen (100) nach dem vorhergehenden Anspruch, wobei die einschraubbare Keilplatte (9) ein Führungselement (12) umfasst, das ausgebildet ist, um durch eine Vielzahl von Leitungen in den Abschnitten (210, 211) zu verlaufen, die zur Aufnahme der Hebekabel (3) bestimmt sind.

7. Bewegliches Modul (1) zum Heben von teleskopischen Türmen (100) nach einem der vorhergehenden Ansprüche, das mindestens eine Hilfsstruktur umfasst, um die Bewegung des Moduls (1) an die Geometrie des teleskopischen Turms (100) im zusammengeklappten Zustand anzupassen.

8. Bewegliches Modul (1) zum Heben von teleskopischen Türmen (100) nach einem der vorhergehenden Ansprüche, das eine oder mehrere Arbeitsplattformen (300) und/oder einen Ausrüstungsspeicher umfasst, die mit dem Rahmen (2') verbunden sind.

9. Verfahren zum Heben eines teleskopischen Turms (100) des Typs, der mindestens einen ansteigenden Abschnitt (210) umfasst, der in Bezug auf einen Tragabschnitt (211) unmittelbar außerhalb des Turms (100) gehoben wird, und unter Verwendung mindestens eines beweglichen Moduls (1) nach einem der vorangehenden Ansprüche, wobei das Verfahren die Durchführung der folgenden Schritte umfasst:
a) Anordnen des beweglichen Moduls (1) auf dem Kopf des Tragabschnitts (211);
b) Verwenden des beweglichen Moduls (1) zum Ausbringen des Hebekabels (3) aus dem Aufwickelelement (6), wobei es in der absteigenden Richtung vom Kopf des Tragabschnitts (211) zur Basis eines ansteigenden Abschnitts (210) ausgebracht wird;
c) Verwenden des beweglichen Moduls (1) zum Aufwickeln des Hebekabels (3) in ansteigender Richtung mit dem Hydraulikheber (2), Einziehen des Hebekabels (3) in das Aufwickelelement (6) und Heben des ansteigenden Abschnitts (210), bis seine Basis den Kopf des Tragabschnitts (211) kontaktiert;
d) Befestigen der Basis des angehobenen ansteigenden Abschnitts (210) am Kopf des Tragabschnitts (211);
e) Lösen des Hebekabels (3) von der Basis des ansteigenden Abschnitts (210);
f) Positionieren des beweglichen Moduls in der Überführungsposition;
g) Entfernen des beweglichen Moduls (1) vom Kopf des Tragabschnitts (211).

10. Verfahren zum Heben von teleskopischen Türmen (100) nach dem vorhergehenden Anspruch, wobei mindestens zwei verschiedene Abschnitte des Turms (100) gehoben werden, **dadurch gekennzeichnet, dass** die Schritte a) bis g) für das Heben verschiedener Abschnitte des Turms (100) wiederholt werden, und wobei zwischen verschiedenen Hebevorgängen der Abschnitte die folgenden Schritte durchgeführt werden:
h) Umpositionieren des beweglichen Moduls (1) in eine neue Position; und/oder
i) horizontales Überführen des beweglichen Hebemoduls (1) an den Kopf eines anderen Tragabschnitts (211) des Turms für einen anderen Hebebetrieb.

11. Verfahren zum Heben von teleskopischen Türmen (100) nach einem der Ansprüche 9-10, wobei:
- mindestens zwei verschiedene Abschnitte des Turms (100) gehoben werden, und wobei zunächst der innerste Abschnitt des Turms (201) gehoben wird, und/oder
- die Köpfe verschiedener zu hebender Turmabschnitte (200) auf ziemlich gleicher Höhe positioniert werden.

12. Verfahren zum Heben von teleskopischen Türmen (100) nach einem der Ansprüche 9-11, wobei das Hebemodul (1) zur Positionierung davon an den Köpfen der verschiedenen Turmabschnitte (200) durch mindestens ein horizontales Bewegungsmittel (8) radial bewegt wird.

13. Verfahren zum Heben von teleskopischen Türmen (100) nach einem der Ansprüche 9-12, das vor dem Durchführen von Schritt b) den folgenden Schritt umfasst:
j) Anbringen einer Hilfsarbeitsstruktur an der Basis des innersten Abschnitts des Turms.

14. Teleskopischer Turm (100) des Typs, der mindestens einen ansteigenden Abschnitt (210) umfasst, der in Bezug auf einen Tragabschnitt (211) unmittelbar außerhalb des Turms (100) gehoben wird, der mindestens ein bewegliches Modul (1) nach einem der Ansprüche 1-8 umfasst.

## Revendications

1. Module mobile (1) de hissage de tours télescopiques (100), adapté au hissage d'une section ascendante (210) d'une tour (100) hissée par rapport à une section de support (211) située immédiatement à l'extérieur de ladite tour (100), et le module mobile (1) étant également adapté pour être fixé temporairement à la tête de ladite section de support (211),
le module mobile (1) comprenant :
- au moins un vérin hydraulique (2) ;
- au moins un câble de hissage (3) formé par une pluralité de torons (3') traversant ledit vérin hydraulique (2), de telle sorte qu'une extrémité du câble de hissage (3) dépasse d'une partie supérieure du vérin hydraulique (2) et que l'autre extrémité du câble de hissage (3) dépasse d'une partie inférieure du vérin hydraulique (2) ;
- des moyens de regroupement (4) positionnés sensiblement à une extrémité du câble de hissage (3), maintenant les torons (3') composant ledit câble de hissage (3) groupés, et dans lequel le diamètre moyen D dudit câble (3) est inférieur à 4·d·(N)^{1/2}, où d est le diamètre moyen des torons (3') formant le câble de hissage (3) et N est le nombre total de torons (3') formant le câble de hissage (3) ;
- un cadre de support (2') auquel est fixée une partie inférieure du vérin hydraulique (2) et comprenant un canal pour le câble de hissage (3) ;
et **caractérisé en ce que** le module mobile (1) comprend en outre :
- un élément de reprise de câble (6) sous la forme d'un tambour ou d'un enrouleur, qui peut être passif ou actif pour collaborer au déploiement et/ou au tirage du câble de hissage (3), qui permet au module mobile (1) d'adopter une position de transfert dans laquelle le câble de hissage (3) est complètement tiré ou repris, et dans laquelle l'extrémité inférieure du câble de hissage (3) et les moyens de groupage (4) sont logés dans le canal du cadre (2') ;
et **en ce que** ledit module de hissage mobile (1) permet un mouvement bidirectionnel du câble de hissage (3) à travers le vérin hydraulique (2), ledit câble de hissage (3) pouvant à la fois être déployé hors de l'élément de reprise (6) dans la direction essentiellement descendante et être repris dans l'élément de reprise (6) dans la direction essentiellement ascendante.

2. Module mobile (1) de hissage de tours télescopiques (100) selon la revendication précédente, dans lequel l'élément de reprise de câble (6) est disposé en position haute par rapport à l'assemblage du module (1), apte à faciliter la circulation des travailleurs pendant le hissage.

3. Module mobile (1) de hissage de tours télescopiques (100) selon l'une quelconque des revendications précédentes, comprenant au moins un élément de guidage (7) pour guider un câble (5) permettant le guidage du câble de hissage (3) dépassant du vérin hydraulique (2).

4. Module mobile (1) de hissage de tours télescopiques (100) selon la revendication précédente, dans lequel l'élément de guidage (7) est en contact avec une section ascendante (210) de la tour (100).

5. Module mobile (1) de hissage de tours télescopiques (100) selon l'une quelconque des revendications précédentes, dans lequel les moyens de regroupement (4) sont récupérables et comprennent :
- une plaque de calage vissée (9) ; et/ou
- une première plaque de distribution vissée qui peut être vissée dans ladite plaque de calage (10) ; et/ou
- une deuxième plaque de distribution (11) avec un trou à travers lequel peut passer ladite plaque de calage vissée (9).

6. Module mobile (1) de hissage de tours télescopiques (100) selon la revendication précédente, dans lequel la plaque de calage vissée (9) comprend un élément de guidage (12) configuré pour passer à travers une pluralité de conduits dans les sections (210, 211), destinées à loger les câbles de hissage (3).

7. Module mobile (1) de hissage de tours télescopiques (100) selon l'une quelconque des revendications précédentes, comprenant au moins une structure auxiliaire pour adapter le mouvement dudit module (1) à la géométrie de la tour télescopique (100) en situation pliée.

8. Module mobile (1) de hissage de tours télescopiques (100) selon l'une quelconque des revendications précédentes, comprenant une ou plusieurs plateformes de travail (300) et/ou stockage de matériel reliées au cadre (2').

9. Procédé de hissage de tours télescopiques (100) du type comprenant au moins une section ascendante (210) hissée par rapport à une section de support (211) située immédiatement à l'extérieur de ladite tour (100), et utilisant au moins un module mobile (1) selon l'une quelconque des revendications précédentes, dans lequel le procédé comprend la mise en oeuvre des étapes suivantes :
a) disposer le module mobile (1) sur la tête de la section de support (211) ;
b) utiliser le module mobile (1) pour déployer le câble de hissage (3) hors de l'élément de reprise (6), en le déployant dans le sens descendant de la tête de la section de support (211) jusqu'à la base d'une section ascendante (210) ;
c) utiliser le module mobile (1) pour reprendre le câble de hissage (3) dans la direction ascendante avec le vérin hydraulique (2), en tirant le câble de hissage (3) dans l'élément de reprise (6) et en hissant la section ascendante (210) jusqu'à ce que sa base entre en contact avec la tête de la section de support (211) ;
d) fixer la base de la section ascendante hissée (210) à la tête de la section de support (211) ;
e) libérer le câble de hissage (3) de la base de la section ascendante (210) ;
f) positionner module mobile dans la position de transfert ;
g) retirer le module mobile (1) de la tête de la section de support (211).

10. Procédé de hissage de tours télescopiques (100) selon la revendication précédente, dans lequel au moins deux sections différentes de la tour (100) sont hissées, **caractérisé en ce que** les étapes a) à g) sont répétées pour le hissage de différentes sections de la tour (100), et dans lequel les étapes suivantes sont effectuées entre des différentes opérations de hissage desdites sections :
h) repositionner le module mobile (1) dans une nouvelle position ; et/ou
i) transférer horizontalement le module de hissage mobile (1) à la tête d'une autre section de support (211) de la tour pour une autre opération de hissage.

11. Procédé de hissage de tours télescopiques (100) selon l'une quelconque des revendications 9 à 10, dans lequel :
- au moins deux sections différentes de la tour (100) sont hissées, et dans lequel la section la plus intérieure de la tour (201) est initialement hissée ; et/ou
- les têtes des différentes sections de tour (200) à hisser sont positionnées sensiblement au même niveau.

12. Procédé de hissage de tours télescopiques (100) selon l'une quelconque des revendications 9 à 11, dans lequel le module de hissage (1) est déplacé radialement pour être positionné dans les têtes des différentes sections de tour (200), par l'intermédiaire d'au moins un moyen de déplacement horizontal (8).

13. Procédé de hissage de tours télescopiques (100) selon l'une quelconque des revendications 9 à 12, comprenant, avant la mise en oeuvre de l'étape b), l'étape suivante :
j) mettre en place une structure de travail auxiliaire à la base de la section la plus intérieure de la tour.

14. Tour télescopique (100) du type comprenant au moins une section ascendante (210) hissée par rapport à une section de support (211) située immédiatement à l'extérieur de ladite tour (100), comprenant au moins un module mobile (1) selon l'une quelconque des revendications 1 à 8.
